# FASCICULE DE BREVET EUROPEEN

(11) **EP 3 302 766 B1**
(45) Date de publication et mention de la délivrance du brevet: **16.03.2022**
(21) Numéro de dépôt: 16729320.8
(22) Date de dépôt: 25.05.2016
(51) Int. Cl.: B01D 63/06, B01D 46/24, B01D 67/00, B28B 1/00, C04B 38/00

(54) **ÉLÉMENT DE SÉPARATION AVEC UN ACHEMINEMENT AMÉLIORE DU FILTRAT**
TRENNELEMENT MIT VERBESSERTER KANALISIERUNG DES FILTRATS
SEPARATION ELEMENT WITH IMPROVED CHANNELLING OF THE FILTRATE

(30) Priorité: 29.05.2015 FR 1554910
(43) Date de publication de la demande: 11.04.2018
(73) Titulaire: Technologies Avancees et Membranes Industrielles, 26110 Nyons (FR)
(72) Inventeur: LESCOCHE, Philippe, 26110 Piegon (FR); ANQUETIL, Jérôme, 84110 Vaison la Romaine (FR)
(74) Mandataire: Cabinet Beau de Loménie
(86) Numéro de dépôt international: PCT/FR2016/051232
(87) Numéro de publication internationale: WO 2016/193572

(56) Documents cités:
- EP-A1- 2 832 426
- EP-A1- 2 832 708
- WO-A2-2014/169902
- FR-A1- 3 006 606
- US-A- 6 077 436

## Description

La présente invention concerne le domaine technique des éléments de séparation d'un milieu fluide à traiter en un filtrat et un rétentat, communément appelés membranes de filtration.

Les procédés de séparation utilisant des membranes sont utilisés dans de nombreux secteurs, notamment dans l'environnement pour la production d'eau potable et le traitement des effluents industriels, dans l'industrie chimique, pétrochimique, pharmaceutique, agro-alimentaire et dans le domaine de la biotechnologie.

Une membrane constitue une barrière sélective et permet, sous l'action d'une force de transfert, le passage ou l'arrêt de certains composants du milieu à traiter. Le passage ou l'arrêt des composants résulte de leur taille par rapport à la taille des pores de la membrane qui se comporte alors comme un filtre. En fonction de la taille des pores, ces techniques sont nommées microfiltration, ultrafiltration ou nanofiltration.

Il existe des membranes de structures et textures différentes. Les membranes sont, en général, constituées d'un support poreux qui assure la résistance mécanique de la membrane et donne également la forme et donc détermine la surface filtrante de la membrane. Sur ce support, une ou plusieurs couches de quelques microns d'épaisseur assurant la séparation et dites couches séparatrices, couches de filtration, couches de séparation, ou couches actives, sont déposées. Durant la séparation, le transfert du fluide filtré s'effectue à travers la couche séparatrice, puis ce fluide se répand dans la texture poreuse du support pour se diriger vers la paroi extérieure du support poreux. Cette partie du fluide à traiter ayant traversé la couche de séparation et le support poreux est appelée perméat ou filtrat et se trouve récupérée par une chambre de collecte ou espace périphérique entourant la membrane. L'autre partie est appelée rétentat et est, le plus souvent, réinjectée dans le fluide à traiter en amont de la membrane, grâce à une boucle de circulation.

De manière classique, le support est d'abord fabriqué selon la forme souhaitée par extrusion, puis fritté à une température et pendant un temps suffisant pour assurer la solidité requise, tout en conservant dans le support obtenu la texture poreuse ouverte et interconnectée voulue. Ce procédé contraint à l'obtention d'un ou plusieurs canaux rectilignes à l'intérieur desquels sont ensuite déposées et frittées la ou les couches séparatrices. Les supports sont traditionnellement de forme tubulaire et comportent un ou plusieurs canaux rectilignes aménagés parallèlement à l'axe central du support.

Le volume intérieur du support étant défini et limité de par ses dimensions extérieures et l'aire de la surface filtrante étant proportionnelle au nombre de canaux, il a été constaté que l'aire des surfaces filtrantes des membranes de filtration fabriquées à partir de supports ayant de telles géométries se heurtent à un plafond et présentent, de ce fait, des performances limitées en termes de débit.

Sont historiquement et chronologiquement apparues sur le marché des éléments de séparation tubulaires cylindriques monocanal, puis des éléments de séparation tubulaires multicanaux.

Les premiers éléments de séparation multicanaux, dont l'un des intérêts, outre l'augmentation de l'aire totale de la surface filtrante, réside dans l'obtention de canaux de petits diamètres hydraulique sans risques de fragilité pour l'élément de séparation, comportaient exclusivement des canaux de sections droites circulaires.

La génération suivante abandonna les canaux circulaires afin de mieux occuper le volume interne du tube, augmenter la compacité et accroître les possibilités de turbulences.

Ainsi, les éléments de séparation multicanaux comportent une série de canaux de sections diverses, distribués du centre à la périphérie du support pour optimiser la surface filtrante par rapport au volume du support poreux. Il a été constaté que cette optimisation conduit à une perte de rendement pour le débit du filtrat.

Dans le domaine des éléments de filtration de type nids d'abeilles, la demande de brevet EP 2 832 426 décrit un élément de filtration comportant des cellules de séparation dont les parois sont pourvues d'une couche séparatrice et des cellules dont les parois sont dépourvues d'une couche séparatrice. Ces cellules dépourvues d'une couche séparatrice sont fermées à chacune de leurs extrémités par un matériau d'obturation rapporté puis fritté. Cette technique de fabrication est relativement complexe à mettre en œuvre.

La demande de brevet WO 2014/169902 décrit un module de filtration comportant des éléments de filtration assemblés entre eux et présentant chacun une série de canaux pour la circulation du milieu fluide à traiter. Ces éléments de filtration sont pourvus à partir de leur périphérie, d'entailles pour la sortie du perméat-Comme chacune de ces entailles réduit la résistance mécanique de l'élément de filtration, leur nombre est nécessairement limité ce qui interdit l'optimisation du débit du filtrat. US6077436 décrit des structures poreuses en monobloc comprenant des canaux cylindriques ainsi que des canaux de dimensions différentes permettant de réduire la contre-pression et améliorer le flux du filtrat.

La présente invention vise à remédier aux inconvénients de l'état de la technique en proposant un nouvel élément de séparation conçu pour augmenter le débit du filtrat tout en conservant une bonne résistance mécanique au support poreux.

Pour atteindre un tel objectif, l'élément de séparation pour obtenir une séparation moléculaire et/ou particulaire d'un milieu fluide à traiter en un filtrat et un rétentat ledit élément de séparation est défini dans la revendication 1, tel que comportant un support monobloc rigide poreux réalisé en un même matériau poreux, le support poreux comportant intérieurement, au moins un canal pour la circulation du milieu fluide, séparé de la paroi extérieure du support poreux, à l'aide du matériau poreux et débouchant d'un côté du support poreux, pour l'entrée du milieu fluide à traiter et d'un autre côté du support poreux, pour la sortie du rétentat, le support poreux délimitant une enveloppe périphérique au-delà de laquelle s'étend un espace périphérique de récupération du filtrat, dans le support poreux étant aménagé au moins un espace vide pour favoriser l'acheminement du filtrat, dont la plus petite dimension est de cinq à cinquante fois supérieure au plus grand diamètre de pores du matériau poreux du support, cet espace vide étant entouré par une partie du matériau poreux constitutif du support monobloc, cette partie du matériau poreux étant non rapportée sur le support poreux en entourant l'espace vide de manière que ce dernier ne débouche pas dans le canal et selon les côtés entrée et sortie du support.

Selon l'invention, au moins un espace vide est aménagé dans le support poreux en étant entouré par une partie du matériau constitutif du support monobloc soit complètement pour former une cavité fermée, ou soit partiellement pour former une cavité débouchant localement dans l'enveloppe périphérique du support, par un passage de section inférieure à une section de la cavité. L'élément de séparation conforme à l'invention comporte en outre en combinaison, l'une et/ou l'autre des caractéristiques additionnelles suivantes :
- au moins un espace vide pour l'acheminement du filtrat est aménagé dans le support poreux pour former une cavité présentant un profil dont au moins une partie possède une forme identique à la forme du profil du canal située en vis-à-vis ;
- au moins un espace vide pour l'acheminement du filtrat est aménagé dans le support poreux pour former une cavité avec un profil entourant un canal ;
- au moins une pluralité d'espaces vides pour l'acheminement du filtrat sont aménagés localement dans le support poreux à partir de son enveloppe périphérique, en étant chacun entouré partiellement par une partie du matériau poreux, pour déboucher dans l'enveloppe périphérique du support poreux et récupérer le filtrat pour son acheminement direct jusqu'à l'espace périphérique du support poreux ;
- la pluralité d'espaces vides pour l'acheminement du filtrat aménagés localement dans le support poreux à partir de son enveloppe périphérique sont distribués régulièrement sur ladite enveloppe périphérique ;
- au moins une couche séparatrice pour le milieu fluide est continûment déposée sur la surface du canal en contact avec le milieu fluide.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en coupe élévation longitudinale d'un premier mode de réalisation d'un élément de séparation conforme à l'invention.
La **Figure 2** est une vue en coupe transversale prise sensiblement selon les lignes **II-II** de l'élément de séparation illustré à la **Fig. 1****.**
La **Figure 3** est une vue en coupe élévation longitudinale d'un deuxième mode de réalisation d'un élément de séparation conforme à l'invention.
La **Figure 3A** est une vue en coupe transversale prise sensiblement selon les lignes **IV-IV** de l'élément de séparation illustré à la **Fig. 3****.**
La **Figure 3B** est une vue en coupe transversale prise sensiblement selon les lignes **B-B** de l'élément de séparation illustré à la **Fig. 3****.**
La **Figure 4** est une vue en perspective d'un élément de séparation réalisé selon le deuxième mode de réalisation.
Les **Figures 4A, 4B, 4C** sont des vues en coupe transversale de l'élément de séparation illustré à la **Fig. 4** prises respectivement selon les lignes **A-A, B-B, C-C.**
La **Figure 4D** est une vue en coupe longitudinale prise selon les lignes **D-D** de la **Fig. 4A****.**
La **Figure 5** est une vue en coupe longitudinale d'une variante de réalisation d'un élément de séparation conforme à l'invention réalisé selon le deuxième mode de réalisation.
La **Figure 5A** est une vue en coupe transversale prise sensiblement selon les lignes **A-A** de la **Fig. 5****.**
La **Figure 5B** est une vue en coupe transversale prise sensiblement selon les lignes **B-B** de la **Fig. 5A****.**

En préliminaire, quelques définitions des termes utilisés dans le cadre de l'invention vont être données.

Par diamètre moyen de pores, on entend la valeur d50 d'une distribution volumique pour laquelle 50% du volume total des pores correspondent au volume des pores de diamètre inférieur à ce d50. La distribution volumique est la courbe (fonction analytique) représentant les fréquences des volumes des pores en fonction de leur diamètre. Le d50 correspond à la médiane séparant en deux parties égales, l'aire située sous la courbe des fréquences obtenue par pénétration de mercure, pour des diamètres moyens de pores supérieurs ou égaux à 4 nm ou par adsorption de gaz, et notamment de N₂, lorsque les diamètres moyens de pores sont inférieurs à 4 nm.

En particulier, on pourra utiliser les techniques décrites dans :
- la norme ISO 15901-1 :2005, pour ce qui concerne la technique de mesure par pénétration de mercure ;
- les normes ISO 15901-2 :2006 et ISO 15901-3 :2007, pour ce qui concerne la technique de mesure par adsorption de gaz.

Toutefois, ces techniques ne permettent pas de déterminer le plus gros diamètre des pores car les faibles pressions d'intrusion du mercure correspondent généralement à la pénétration dans les rugosités extérieures du massif poreux plutôt qu'à la pénétration à l'intérieur de la porosité de ce massif.

Pour déterminer le plus gros diamètre de pores, l'invention prévoit d'utiliser la méthode du point de bulle.

Le principe du point de bulle est basé sur le fait qu'une quantité de liquide est retenue dans les pores du filtre par les forces de tension de surface et par capillarité. La pression de gaz minimale requise pour évacuer le liquide des pores est fonction du diamètre des pores selon la formule de Jurin.

Pour réaliser ce test, il convient :
1) de mouiller complètement le filtre avec le liquide de test approprié, généralement de l'eau pour les membranes hydrophiles ou un mélange alcool/eau pour les membranes hydrophobes ;
2) d'augmenter progressivement la pression jusqu'à observer l'apparition d'un bullage continu et rapide en sortie. La pression obtenue permet de calculer le plus gros diamètre de pores selon la formule précitée.

La mesure de ce plus gros diamètre de pore est appliquée à un élément de filtration obtenu sans espaces vides objets de l'invention mais dans un matériau identique.

L'objet de l'invention vise les éléments de séparation pour obtenir une séparation moléculaire et/ou particulaire d'un milieu fluide par filtration tangentielle, communément appelés membranes de filtration. D'une manière générale et comme illustré sur les **Figures,** de tels éléments de séparation **1** comportent un support rigide poreux **2** monolithique ou monobloc, réalisé dans un même matériau.

Dans le cadre de l'invention, un support monobloc est défini comme étant fait d'une seule pièce en un seul et même matériau, homogène et continu dans tout son ensemble, sans soudure ni apports exogènes. Pour de tels éléments de séparation, le corps constituant le support **2** présente une texture poreuse continue sur la totalité du volume du support poreux. Cette texture poreuse est caractérisée par le diamètre moyen des pores déduit de leur distribution mesurée par porométrie par pénétration de mercure.

La texture poreuse du support est ouverte et forme un réseau de pores interconnectés, ce qui permet au fluide filtré par la couche séparatrice de filtration, de traverser le support poreux et d'être récupéré dans l'espace périphérique du support poreux. Il est d'usage de mesurer la perméabilité à l'eau du support pour qualifier la résistance hydraulique du support, ce qui permet dans le même temps de confirmer l'interconnexion de la texture poreuse. En effet, dans un milieu poreux, l'écoulement stationnaire d'un fluide visqueux incompressible est régi par la loi de Darcy. La vitesse du fluide est proportionnelle au gradient de la pression et inversement proportionnelle à la viscosité dynamique du fluide, via un paramètre caractéristique appelé perméabilité qui peut être mesurée, par exemple, selon la norme française NF X 45-101 de Décembre 1996.

Le plus souvent, le support poreux **2** est réalisé en un matériau inorganique non métallique. De préférence, le support poreux **2** est constitué d'une céramique, choisie parmi les oxydes, les nitrures, les carbures ou d'autres matériaux céramiques et leur mélanges, et, en particulier, parmi l'oxyde de titane, l'alumine, la zircone et leur mélange, le nitrure de titane, le nitrure d'aluminium, le nitrure de bore, et le carbure de silicium éventuellement en mélange avec un autre matériau céramique. Il est à noter que le support poreux peut être réalisé aussi en un matériau organique ou inorganique purement métallique. Par exemple, le support poreux est réalisé en un métal pur comme l'aluminium, le zinc, le cuivre, le titane ou sous forme d'un alliage de plusieurs de ces métaux ou d'aciers inoxydables. Par exemple, le support poreux **2** présente un diamètre moyen de pores appartenant à la gamme allant de 1 µm à 100 µm.

Le support poreux **2** comporte intérieurement, au moins un canal **3** formé par des espaces vides pour la circulation du milieu fluide. Ce canal **3** correspond à des zones du support poreux ne comportant pas de matière poreuse. Ce canal **3** est aménagé au sein du support poreux **2** de manière que ce support poreux est délimité extérieurement, par une paroi extérieure **2₁** continue entre une entrée **4** pour le milieu fluide située d'un côté du support poreux, et une sortie **5** pour le rétentat située d'un autre côté du support poreux. Ainsi, chaque canal **3** est séparé de la paroi extérieure **2₁** du support poreux, à l'aide du matériau poreux assurant l'évacuation du filtrat débouchant de la paroi extérieure **2₁,** pour être récupéré dans l'espace périphérique **6** du support poreux afin d'être évacué par tous systèmes classiques d'évacuation.

Dans les exemples de réalisation illustrés sur les dessins, le support poreux **2** présente la forme d'un cylindre de section circulaire. Bien entendu, la forme du support poreux **2** est donnée simplement à titre d'illustration de sorte que le support poreux **2** peut prendre toutes les formes possibles. Dans cet exemple illustré, le support poreux **2** est un élément allongé dont l'entrée **4** pour le milieu fluide est située à l'une des extrémités du support poreux tandis que la sortie **5** pour le rétentat est située à l'extrémité opposée du support poreux. Ainsi, la structure ouverte formée par les espaces vides **3** aménagés au sein du support poreux communique d'un côté, avec l'entrée **4** du milieu fluide à traiter et de l'autre côté, avec la sortie **5** pour le rétentat.

Comme cela sera illustré dans la suite de la description, le milieu fluide entre ou sort respectivement de l'entrée **4** ou la sortie **5** du support poreux, par une ou plusieurs ouvertures séparées. En d'autres termes, chaque canal **3** pour la circulation du milieu fluide est aménagé dans le support poreux **2** pour déboucher d'une part, du côté entrée du support poreux par une ou plusieurs ouvertures formant l'entrée **4** et d'autre part, du côté sortie du support poreux par une ou plusieurs ouvertures formant la sortie **5.**

La partie du support poreux **2** délimitant un canal **3** présente une surface recouverte par au moins une couche séparatrice **7,** destinée à être en contact avec le milieu fluide à traiter, circulant à l'intérieur du canal **3.** Une partie du milieu fluide traverse la couche séparatrice **7** et le support poreux **2,** de sorte que cette partie traitée du fluide, appelée filtrat ou perméat, s'écoule par la paroi extérieure **2₁** du support poreux. Le filtrat est récupéré dans l'espace périphérique **6** du support poreux par tous moyens appropriés.

La couche séparatrice de filtration **7** qui recouvre les parois de chaque canal **3** assure la filtration du milieu fluide à traiter. Les couches séparatrices de filtration, par définition, se doivent d'avoir un diamètre moyen de pores inférieur à celui du support poreux **2.** Les couches séparatrices délimitent la surface de l'élément de séparation par flux tangentiel destinée à être en contact avec le fluide à traiter et sur laquelle va circuler le fluide à traiter.

Un élément de séparation, par flux tangentiel, présente généralement une longueur de 1 mètre à 1,5 mètre. La section d'un élément de séparation par flux tangentiel présente le plus souvent une surface de 0,8 cm² à 14 cm². Les épaisseurs des couches séparatrices de filtration varient typiquement entre 1 et 100 µm d'épaisseur. Bien entendu, pour assurer sa fonction de séparation, et servir de couche active, les couches séparatrices présentent un diamètre moyen de pores inférieur au diamètre moyen de pores du support. Le plus souvent, le diamètre moyen de pores des couches séparatrices de filtration est au moins inférieur d'un facteur **3,** et de préférence, d'au moins un facteur **5** par rapport à celui du support.

Les notions de couches séparatrices de microfiltration, ultrafiltration et nanofiltration sont bien connues de l'homme de l'art. Il est généralement admis que :
- les couches séparatrices de microfiltration présentent un diamètre moyen de pores compris entre 0,1 et 2 µm ;
- les couches séparatrices d'ultrafiltration présentent un diamètre moyen de pores compris entre 0,01 et 0,1 µm ;
- les couches séparatrices de nanofiltration présentent un diamètre moyen de pores compris entre 0,5 et 10 nm.

Il est possible que cette couche de micro ou d'ultrafiltration soit déposée directement sur le support poreux (cas d'une couche de séparation monocouche), ou encore sur une couche intermédiaire de diamètre moyen de pores moindre, elle-même déposée directement sur le support poreux. La couche de séparation peut, par exemple, être à base de, ou constituée exclusivement, d'un ou plusieurs oxydes métalliques, carbure ou nitrure ou autres céramiques. En particulier, la couche de séparation sera à base de, ou constituée exclusivement de TiO₂, Al₂O₃ et ZrO₂, seul ou en mélange.

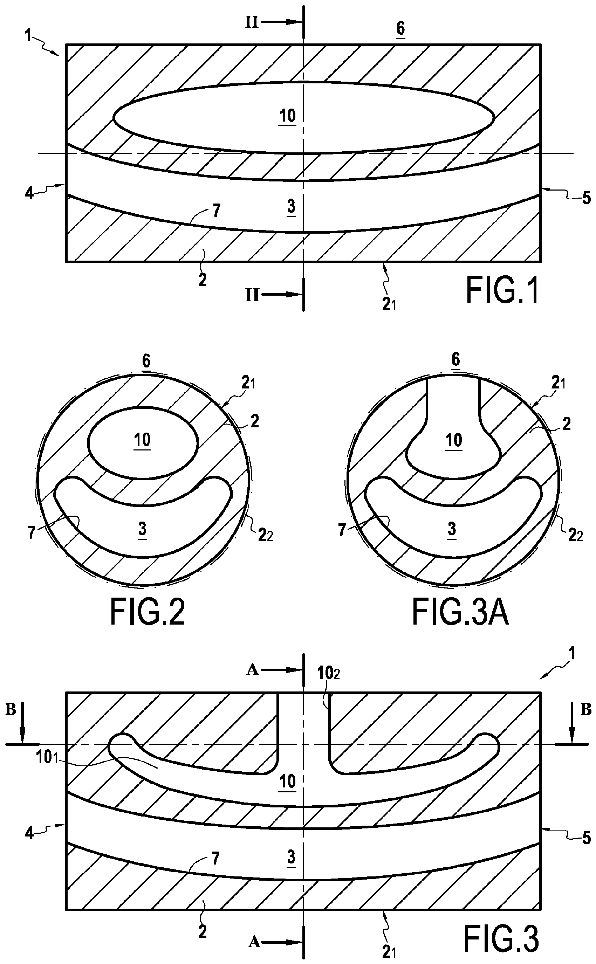

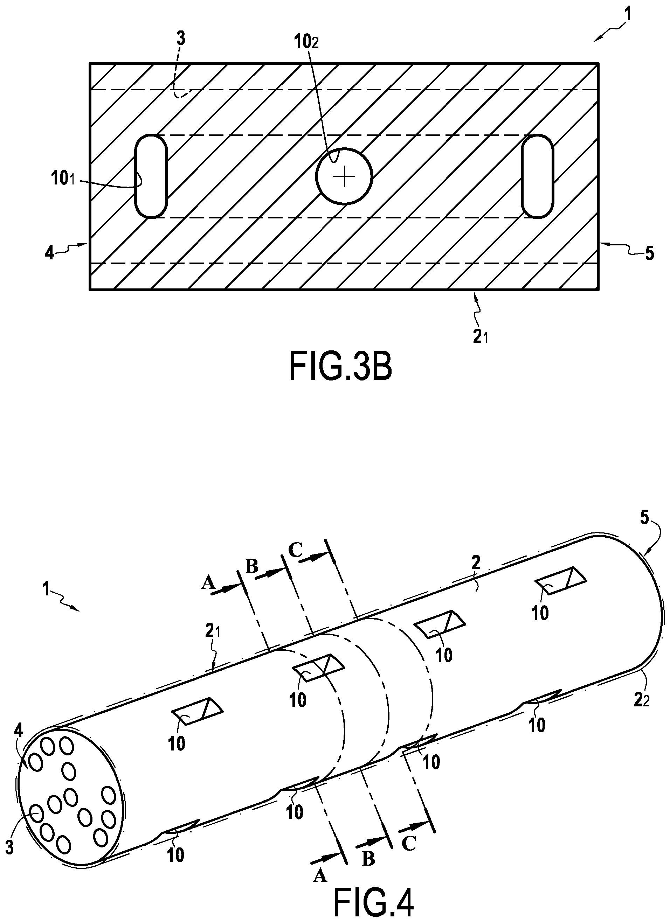

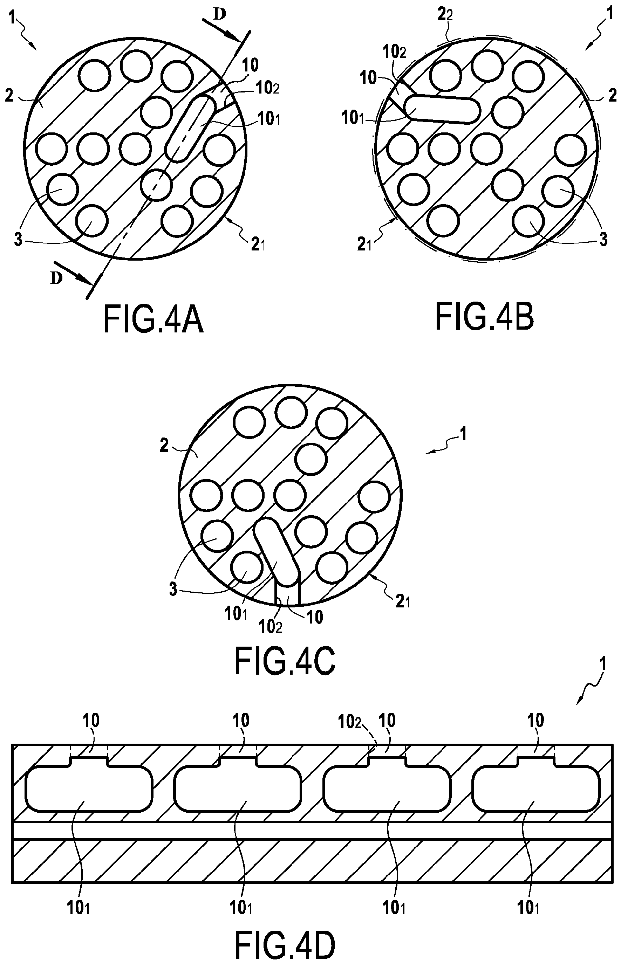

Selon les exemples illustrés aux **Fig. 1, 3****,** **4** et **5****,** le support poreux **2** comporte intérieurement, un canal **3** débouchant au niveau de l'entrée **4** et de la sortie **5** du support poreux. Selon l'exemple illustré à la **Fig. 4****,** le support poreux **2** comporte plusieurs canaux **3** et dans l'exemple illustré, treize canaux **3** de circulation pour le milieu fluide, débouchant chacun au niveau de l'entrée **4** et de la sortie **5** du support poreux.

Dans le cas où le support poreux comporte plusieurs canaux, il peut être prévu d'aménager les canaux **3** dans le support poreux pour créer au sein du support poreux, au moins deux circuits de circulation pour le milieu fluide, non interconnectés entre eux, entre les côtés entrée et sortie du support poreux. Selon cet exemple de réalisation, chaque canal **3** s'étend de l'entrée à la sortie du support poreux sans être connecté à un autre canal.

Conformément à une caractéristique de l'invention, est aménagé dans le support poreux, au moins un espace vide **10** pour favoriser l'acheminement du filtrat jusqu'à l'espace périphérique **6** du support poreux. Cet espace vide **10** correspond à une absence de matériau. Selon une caractéristique de l'invention, la plus petite dimension de cet espace vide **10** est de cinq à cinquante fois supérieure au plus grand diamètre de pore du matériau poreux du support, le plus grand diamètre de pore correspondant à la valeur mesurée en micromètres, non nulle de la fraction volumique occupée par les pores les plus grands même si cette valeur correspond à des pores obtenus à partir d'agents poroformes. Ainsi par exemple, si le plus grand diamètre des pores du support poreux est égal à 50 micromètres alors la plus petite dimension de cet espace vide est comprise entre 0.25 mm et 2.5 mm.

Selon une autre caractéristique de l'invention, cet espace vide **10** est entouré complètement ou partiellement par une partie du matériau poreux constitutif du support monobloc, en considérant que cette partie du matériau poreux est non rapportée sur le support poreux. Par ailleurs, cette partie du matériau poreux entoure l'espace vide **10** de manière que ce dernier ne débouche pas dans le canal **3** et ne débouche pas selon les côtés entrée **4** et sortie **5** du support. Ainsi, il doit être compris qu'une partie du matériau poreux constitutif du support monobloc, subsiste entre cet espace vide **10** et le canal **3** mais également entre cet espace vide **10** et les côtés entrée **4** et sortie **5** du support. En d'autres termes et comme déjà expliqué, la partie du matériau poreux qui délimite cet espace vide **10** forme avec le reste du matériau poreux du support, une seule pièce en un seul et même matériau, homogène et continu dans tout son ensemble, sans soudure ni apports extérieurs. Ainsi, il existe une identité et une continuité de matériau et de texture poreuse sur la totalité du support poreux monobloc qui comporte le ou les canaux **3** et le ou les espaces vides **10.**

Bien entendu, cet espace vide **10** est aménagé pour présenter un volume et un positionnement par rapport au canal **3** pour maintenir une résistance mécanique suffisante au support poreux tout en assurant une fonction de drainage du filtrat venant de la couche séparatrice **7.** En effet, il doit être compris que la partie du support poreux **2** situé entre le canal **3** et l'espace vide **10** collecte le filtrat venant de traverser la couche séparatrice **7.** A la sortie de cette partie du support poreux, l'espace vide **10** collecte ou draine le flux de filtrat qui se répand dans l'espace vide **10.** En raison de l'absence de matière dans cet espace vide, la perte de charge induite par cet écoulement est très faible voire nulle et en tout état de cause bien inférieure à celle qu'elle aurait eu en présence de la matière poreuse. Il peut donc être considéré que la pression du filtrat à la sortie de cet espace vide **10** est peu différente voire identique à la pression en entrée de cet espace vide. Il s'ensuit que le débit du filtrat sortant de la paroi extérieure **2₁** du support poreux et provenant de l'espace vide est supérieur au débit de filtrat traversant la même portion du support mais pourvu de matériau poreux.

Selon une caractéristique avantageuse de réalisation, au moins un espace vide **10** pour l'acheminement du filtrat est aménagé dans le support poreux **2** pour former une cavité présentant un profil dont au moins une partie possède une forme identique à la forme du profil du canal **3** située en vis-à-vis.

Selon un premier mode de réalisation d'un élément de séparation conforme à l'invention illustré aux **Fig. 1** et **2****,** l'espace vide **10** pour l'acheminement du filtrat est aménagé dans le support poreux en étant entouré complètement par une partie du matériau poreux constitutif du support monobloc pour former un espace vide complétement fermé favorisant l'acheminement du filtrat. Cet espace vide **10** forme une cavité fermée ou un trou complètement inclus à l'intérieur du support poreux. Ainsi, comme expliqué ci-dessus, une partie du matériau poreux subsiste entre cet espace vide fermé **10** et les côtés entrée **4** et sortie **5** du support de sorte que cet espace vide fermé **10** ne débouche pas selon les côtés entrée **4** et sortie **5** du support. De plus, l'espace vide fermé **10** est aménagé dans le support poreux, entre le canal **3** et la paroi extérieure **2₁**, en laissant subsister du matériau poreux entre le canal **3** et la paroi extérieure afin de ne pas déboucher ni dans le canal **3** ni dans la paroi extérieure **2₁**.

Selon cet exemple de réalisation, la partie du support poreux **2** situé entre le canal **3** et l'espace vide fermé **10** récupère du filtrat venant de traverser la couche séparatrice **7.** A la sortie de cette partie du support poreux, le flux de filtrat se répand dans l'espace vide fermé **10,** sans perte de pression comme expliqué ci-avant. Après sa circulation dans l'espace vide fermé **10**, ce flux de filtrat traverse ensuite la partie du support poreux située entre cet espace vide fermé **10** et la paroi extérieure **2₁**, pour sortir ensuite de cette paroi extérieure du support poreux. Le débit du filtrat sortant de la paroi extérieure du support poreux et provenant de l'espace vide fermé est supérieur au débit de filtrat qui aurait traversé la même portion du support mais pourvu de matériau poreux. Cet espace vide fermé **10** favorise ainsi la progression du filtrat venant de la couche séparatrice **7,** en l'acheminant à travers le matériau poreux présent jusqu'à la paroi extérieure **2₁**, à travers laquelle le filtrat débouche.

Comme cela apparaît clairement sur les **Fig. 1** et **2****,** la cavité **10** présente dans le sens longitudinal de l'élément pris entre l'entrée **4** et la sortie **5,** un profil concave identique à la forme concave du canal **3** située en vis-à-vis **(****Fig. 1****).** De même, dans le sens transversal pris perpendiculairement au sens longitudinal, la cavité **10** présente un profil concave identique à la forme concave du canal **3** située en vis-à-vis.

Selon un deuxième mode de réalisation d'un élément de séparation conforme à l'invention illustré aux **Fig. 3A****,** **3B****,** l'espace vide **10** pour l'acheminement du filtrat est aménagé dans le support poreux en étant entouré partiellement par une partie du matériau poreux, pour être débouchant localement et communiquer directement avec l'espace périphérique **6** de récupération du filtrat. Cet espace vide débouchant **10** tel un trou borgne collecte le filtrat sortant de la paroi extérieure **2₁** du support poreux. Il est à noter que la paroi extérieure **2₁** du support poreux correspond à la paroi du support poreux par laquelle le filtrat sort définitivement du support poreux. Ainsi, cette paroi extérieure **2₁** du support poreux s'étend donc à l'intérieur de l'espace vide débouchant **10** mais ne comporte pas la paroi du support poreux délimitant un espace vide fermé **10** tel qu'illustré à la **Fig. 1****.**

Comme expliqué ci-dessus, une partie du matériau poreux subsiste entre cet espace vide débouchant **10** et les côtés entrée **4** et sortie **5** du support poreux de sorte que l'espace vide débouchant **10** ne débouche pas selon les côtés entrée **4** et sortie **5** du support. De plus, selon cet exemple, l'espace vide débouchant **10** comporte une cavité **10₁** aménagée en relation de proximité du canal **3** pour drainer le filtrat ayant traversé la couche séparatrice **7.** Cette cavité **10₁** est ouverte par un passage **10₂** par exemple de section circulaire qui débouche localement dans l'enveloppe périphérique **2₂** du support.

Le passage **10₂** débouche dans l'enveloppe périphérique **2₂** du support avec une section inférieure à une section de la cavité **10₁**. En d'autres termes, la cavité **10₁** présente selon au moins une direction, une section supérieure à la section du passage **10₂**. Ainsi, le passage **10₂** constitue un rétrécissement par rapport à la cavité **10₁**. L'enveloppe périphérique **2₂** du support correspond à la surface immatérielle tangente à la paroi extérieure **2₁** du support poreux, à l'exception de la partie de la paroi extérieure du support poreux formant un espace vide débouchant **10** (ou trou borgne) dont l'intersection de son contour avec l'enveloppe périphérique **2₂** forme une ligne fermée. Ainsi, dans les exemples de réalisation illustrés aux **Fig. 3** et **4****,** l'enveloppe périphérique **2₂** correspond au cylindre de la section circulaire du support poreux s'étendant du côté entrée **4** au côté sortie **5**. Il est à noter que cette enveloppe périphérique **2₂** suit le contour du support poreux même si le support poreux ne présente pas une section uniforme sur sa longueur ou un décrochement s'étendant d'un côté à l'autre du support poreux. Ainsi, par exemple, l'enveloppe périphérique **2₂** suit le contour d'un support poreux présentant localement sur une partie de sa longueur une diminution de son diamètre ou pourvu d'un couloir ouvert aménagé dans le support poreux d'un côté à l'autre du support poreux.

L'enveloppe périphérique **2₂** du support et chaque espace vide débouchant **10** présentent une ligne d'intersection à contour fermé de forme elliptique dans l'exemple illustré à la **Fig. 3** et de forme rectangulaire dans l'exemple illustré à la **Fig. 4****.** Par convention, l'espace périphérique **6** est à la périphérie du support poreux monobloc et correspond au volume situé à l'extérieur de l'enveloppe périphérique **2₂**.

Comme cela apparaît clairement aux **Fig. 3** et **3A****,** la cavité **10** présente dans le sens longitudinal de l'élément pris entre l'entrée **4** et la sortie **5,** un profil concave identique à la forme concave du canal **3** située en vis-à-vis **(****Fig. 3****).** De même, dans le sens transversal pris perpendiculairement au sens longitudinal, la cavité **10** présente un profil concave identique à la forme concave du canal **3** située en vis-à-vis **(****Fig. 3A****).**

Selon l'exemple de réalisation illustré à la **Fig. 3****,** la partie du support poreux **2** situé entre le canal **3** et l'espace vide débouchant **10** récupère du filtrat venant de traverser la couche séparatrice **7.** A la sortie de cette partie du support poreux, le flux de filtrat se répand dans l'espace vide débouchant **10,** et en particulier dans la cavité **10₁** et dans le passage **10₂**, sans perte de pression comme expliqué ci-avant. Ce flux de filtrat sort ainsi de la paroi extérieure **2₁** du support poreux pour être acheminé directement, à travers l'espace vide débouchant, jusqu'à l'espace périphérique **6** du support poreux. L'espace vide débouchant **10** draine ainsi le filtrat venant de la couche séparatrice **7,** pour l'acheminer directement à l'espace périphérique **6** du support poreux, par son trajet dans un milieu dépourvu de matériau poreux. Le débit du filtrat sortant à l'espace périphérique **6** du support poreux et provenant de l'espace vide borgne **10** est supérieur au débit de filtrat qui aurait traversé la même portion du support mais pourvu de matériau poreux.

Bien entendu, un support poreux conforme à l'invention peut comporter un ou plusieurs espaces vides, de formes identiques ou différentes entre eux, relevant du premier mode de réalisation (espaces vides fermés) et/ou du deuxième mode de réalisation (espaces vides débouchant). Ainsi, la multiplication des espaces vides **10** ou de leur volume permet d'augmenter d'autant le débit du filtrat.

De tels supports monoblocs qui ne peuvent pas être réalisés par les techniques traditionnelles d'extrusion peuvent être réalisés par exemple par des techniques additives comme celles décrites par exemple par la demande de brevet FR 3 006 606.

La **Fig. 4** illustre un exemple de réalisation d'un élément de séparation réalisé selon le deuxième mode de réalisation. Selon cet exemple de réalisation, l'élément de séparation **1** comporte un support poreux **2** présentant la forme d'un cylindre de section circulaire. Le support poreux **2** possède ainsi une enveloppe périphérique **2₂** de forme cylindrique de section circulaire. Dans ce support poreux **2,** treize canaux **3** sont aménagés pour s'étendre parallèlement les uns aux autres et à l'axe longitudinal du support poreux. Chaque canal **3** débouche ainsi au niveau de l'entrée **4** et de la sortie **5** du support poreux. Les canaux **3** sont aménagés pour laisser subsister un volume de matériau poreux suffisant pour l'aménagement d'espaces vides débouchant **10** entourés de matériau poreux afin que ces espaces vides ne débouchent dans aucun canal **3** ni au niveau de l'entrée **4** et de la sortie **5** du support poreux. Conformément au deuxième mode de réalisation de l'invention, les espaces vides débouchant **10** sont aménagés localement dans le support poreux à partir de son enveloppe périphérique **2₂**.

Chaque espace vide débouchant **10** comporte une cavité **10₁** aménagée à proximité du canal **3** et débouchant localement dans l'enveloppe périphérique **2₂** du support par un passage **10₂** de section inférieure à une section de la cavité **10₁** comme expliqué ci-avant.

Selon une variante avantageuse de réalisation, les espaces vides débouchant **10** sont aménagés localement dans le support poreux afin de ne pas affecter la résistance mécanique du support poreux tout en assurant leur rôle de facilitateur d'acheminement du filtrat jusqu'à l'espace périphérique **6** du support poreux. Selon une variante de réalisation, la pluralité des espaces vides débouchant **10** pour l'acheminement du filtrat sont aménagés localement dans le support poreux à partir de son enveloppe périphérique, en étant distribués régulièrement sur ladite enveloppe périphérique **2**₂, comme illustré dans l'exemple de la **Fig. 4****.** Selon cet exemple, les canaux **3** sont répartis en trois groupes symétriques décalés à 120° et comportant chacun une série de canaux (deux dans l'exemple) aménagés selon un rayon en partant d'un canal central, chacune de ces séries de canaux radiaux se prolongeant par une série de canaux (deux dans l'exemple) aménagés selon un arc de cercle de même centre pour l'ensemble de ces canaux. Selon cet exemple, des espaces vides débouchant **10** sont aménagés dans le support poreux à partir de son enveloppe périphérique **2₂,** dans le volume de matériau poreux présent entre les canaux d'un premier groupe et les canaux radiaux d'un deuxième groupe voisin au premier groupe. Selon cet exemple illustré sur les dessins, des séries de quatre espaces vides débouchant **10** sont distribués chacune selon une génératrice du support poreux pour permettre leur réalisation entre les canaux d'un premier groupe et les canaux radiaux d'un deuxième groupe voisin au premier groupe. Tel que cela ressort clairement des **Fig. 4A, 4B, 4C, 4D****,** les espaces vides débouchant **10** sont distribués régulièrement sur ladite enveloppe périphérique à la fois selon la circonférence et la longueur du support poreux.

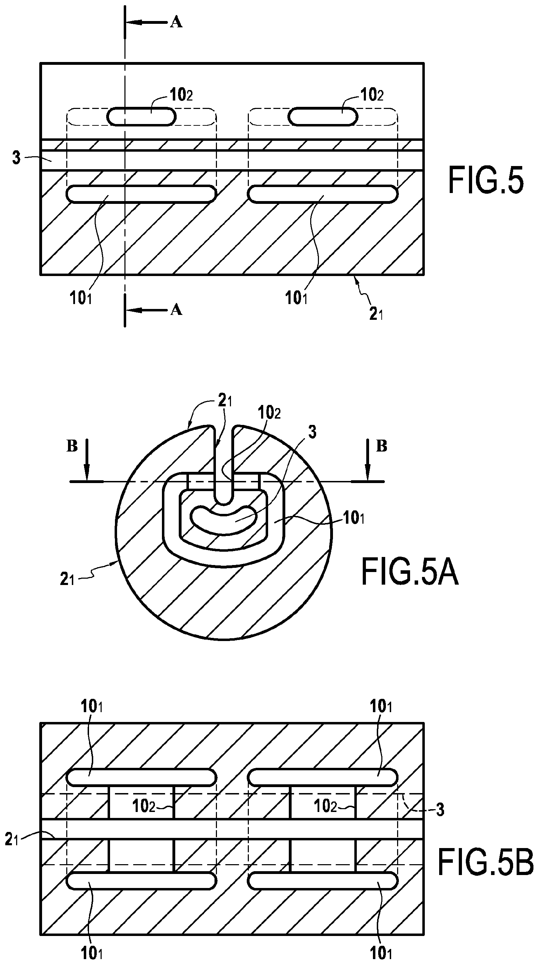

Les **Fig. 5, 5A** et **5B** illustrent une autre variante d'un élément de séparation conforme à l'invention selon le deuxième mode de réalisation selon laquelle au moins un espace vide **10** est aménagé dans le support poreux pour former une cavité **10₁** avec un profil entourant un canal **3.** Selon cet exemple, l'élément de séparation comporte deux cavités **10₁** entourant chacune le canal **3** et débouchant au niveau d'un couloir aménagé sur la longueur du support poreux, localement dans l'enveloppe périphérique **2₂** du support par un passage **10₂** de section rétrécie par rapport à la cavité **10₁**. Bien entendu, le nombre de canaux **3** et d'espaces vides **10** ainsi que la disposition des canaux et la forme des espaces vides peuvent être différents des exemples illustrés. De tels supports monoblocs qui ne peuvent pas être réalisés par les techniques traditionnelles d'extrusion peuvent être réalisés par exemple par des techniques additives comme celles décrites par exemple par la demande de brevet FR 3 006 606 ou par un usinage localisé comme par fraisage par exemple.

## Revendications

1. - Elément de séparation pour obtenir une séparation moléculaire et/ou particulaire d'un milieu fluide à traiter en un filtrat et un rétentat, ledit élément de séparation comportant un support monobloc rigide poreux **(2)** réalisé en un même matériau poreux, le support poreux **(2)** comportant intérieurement, au moins un canal **(3)** pour la circulation du milieu fluide, séparé de la paroi extérieure (**2₁**) du support poreux, à l'aide du matériau poreux et débouchant d'un côté **(4)** du support poreux, pour l'entrée du milieu fluide à traiter et d'un autre côté **(5)** du support poreux, pour la sortie du rétentat, le support poreux délimitant une enveloppe périphérique (**2₂**) au-delà de laquelle s'étend un espace périphérique **(6)** de récupération du filtrat, dans le support poreux étant aménagé au moins un espace vide (**10**) pour l'acheminement du filtrat, dont la plus petite dimension est de cinq à cinquante fois supérieure au plus grand diamètre de pores du matériau poreux du support, cet espace vide **(10)** étant entouré par une partie du matériau poreux constitutif du support monobloc, cette partie du matériau poreux étant non rapportée sur le support poreux en entourant l'espace vide **(10)** de manière que ce dernier ne débouche pas dans le canal **(3)** et dans les côtés entrée **(4)** et sortie **(5)** du support, **caractérisé en ce qu'**au moins un espace vide **(10)** est aménagé dans le support poreux en étant entouré par une partie du matériau constitutif du support monobloc **(2)** soit complètement pour former une cavité fermée, ou soit partiellement pour former une cavité (**10₁**) débouchant localement dans l'enveloppe périphérique (**2₂**) du support, par un passage (**10₂**), la cavité (**10₁**) présentant selon au moins une direction une section supérieure à la section du passage (**10₂**).

2. - Elément de séparation selon la revendication 1, **caractérisé en ce qu'**au moins un espace vide (**10**) pour l'acheminement du filtrat est aménagé dans le support poreux **(2)** pour former une cavité présentant un profil dont au moins une partie possède une forme identique à la forme du profil du canal **(3)** situé en vis-à-vis.

3. - Elément de séparation selon la revendication 1 ou 2, **caractérisé en ce qu'**au moins un espace vide (**10**) pour l'acheminement du filtrat est aménagé dans le support poreux pour former une cavité avec un profil entourant un canal (**3**).

4. - Elément de séparation selon la revendication 1 ou 2, **caractérisé en ce qu'**au moins une pluralité d'espaces vides **(10)** pour l'acheminement du filtrat sont aménagés localement dans le support poreux à partir de son enveloppe périphérique (**2₂**), en étant chacun entouré partiellement par une partie du matériau poreux, pour déboucher dans l'enveloppe périphérique (**2₂**) du support poreux et récupérer le filtrat pour son acheminement direct jusqu'à l'espace périphérique du support poreux.

5. - Elément de séparation selon la revendication 4, **caractérisé en ce que** la pluralité d'espaces vides **(10)** pour l'acheminement du filtrat aménagés localement dans le support poreux à partir de son enveloppe périphérique (**2₂**) sont distribués régulièrement sur ladite enveloppe périphérique.

6. - Elément de séparation selon l'une des revendications 1 à 5, **caractérisé en ce que** le support poreux monobloc **(2)** est réalisé par une méthode additive.

7. - Elément de séparation selon l'une des revendications 1 à 6, **caractérisé en ce qu'**il comporte au moins une couche séparatrice **(7)** pour le milieu fluide continûment déposée sur la surface du canal en contact avec le milieu fluide.

## Patentansprüche

1. Trennelement zum Erzielen einer molekularen und/oder partikulären Trennung eines zu behandelnden fluiden Mediums in ein Filtrat und ein Retentat, wobei das Trennelement einen porösen starren einstückigen Träger (2) aus einem gleichen porösen Material umfasst, wobei der poröse Träger (2) innen wenigstens einen Kanal (3) für die Zirkulation des fluiden Mediums umfasst, der von der Außenwand (**2₁**) des porösen Trägers mit Hilfe des porösen Materials getrennt ist und auf einer Seite (4) des porösen Trägers für den Eintritt des zu behandelnden fluiden Mediums und auf einer anderen Seite (5) des porösen Trägers für den Austritt des Retentats ausmündet, wobei der poröse Träger einen Umfangsmantel (**2₂**) definiert, jenseits dessen sich ein Umfangsraum (6) zur Rückgewinnung des Filtrats erstreckt, wobei in dem porösen Träger wenigstens ein Leerraum (**10**) zum Befördern des Filtrats angeordnet ist, dessen kleinste Abmessung fünf- bis fünfzigmal größer ist als der größte Porendurchmesser des porösen Materials des Trägers, wobei dieser Leerraum (**10**) von einem Teil des porösen Materials, das den einstückigen Träger bildet, umgeben ist, wobei dieser Teil des porösen Materials nicht an den porösen Träger angesetzt ist, indem er den Leerraum (**10**) umgibt, so dass letzterer nicht in den Kanal (3) sowie in die Eingangs- (4) und Ausgangsseiten (5) des Trägers mündet, **dadurch gekennzeichnet, dass** wenigstens ein Leerraum (**10**) in dem porösen Träger dadurch angeordnet ist, dass er von einem Teil des Materials, das den einstückigen Träger (2) bildet, umgeben ist, entweder vollständig, um einen geschlossenen Hohlraum zu bilden, oder teilweise, um einen Hohlraum (10₁) zu bilden, der in den Umfangsmantel (**2₂**) des Trägers lokal über einen Durchgang (10₂) mündet, wobei der Hohlraum (10₁) in wenigstens einer Richtung einen Querschnitt aufweist, der größer als der Querschnitt des Durchgangs (10₂) ist.

2. Trennelement nach Anspruch 1, **dadurch gekennzeichnet, dass** wenigstens ein Leerraum (**10**) zum Befördern des Filtrats in dem porösen Träger (2) angeordnet ist, um einen Hohlraum zu bilden, der ein Profil aufweist, von dem wenigstens ein Teil eine Form besitzt, die mit der gegenüberliegenden Form des Profils des Kanals (3) identisch ist.

3. Trennelement nach Anspruch 1 oder 2, **dadurch gekennzeichnet, dass** wenigstens ein Leerraum (**10**) zum Befördern des Filtrats in dem porösen Träger angeordnet ist, um einen Hohlraum mit einem einen Kanal (3) umgebenden Profil zu bilden.

4. Trennelement nach Anspruch 1 oder 2, **dadurch gekennzeichnet, dass** in dem porösen Träger von seinem Umfangsmantel (22) ausgehend lokal wenigstens mehrere Leerräume (**10**) zum Befördern des Filtrats unter jeweiligem teilweisen Umgebensein von einem Teil des porösen Materials angeordnet sind, um in den Umfangsmantel (**2₂**) des porösen Trägers zu münden und das Filtrat für sein direktes Befördern bis zu dem Umfangsraum des porösen Trägers zurückzugewinnen.

5. Trennelement nach Anspruch 4, **dadurch gekennzeichnet, dass** die mehreren Leerräume (**10**) zum Befördern des Filtrats, die in dem porösen Träger von seinem Umfangsmantel (**2₂**) ausgehend lokal angeordnet sind, über den Umfangsmantel gleichmäßig verteilt sind.

6. Trennelement nach einem der Ansprüche 1 bis 5, **dadurch gekennzeichnet, dass** der einstückige poröse Träger (2) durch ein additives Verfahren hergestellt ist.

7. Trennelement nach einem der Ansprüche 1 bis 6, **dadurch gekennzeichnet, dass** es wenigstens eine Trennschicht (7) für das fluide Medium aufweist, die auf der mit dem fluiden Medium in Kontakt befindlichen Oberfläche des Kanals kontinuierlich abgeschieden wird.

## Claims

1. A separator element for obtaining molecular and/or particulate separation of a fluid medium for treatment into a filtrate and a retentate, said separator element comprising a porous rigid single-piece substrate (2) made out of a single porous material, the porous substrate (2) including internally at least one channel (3) for passing a flow of the fluid medium and separated from the outside wall (2₁) of the porous substrate by the porous material, the channel opening out at one end (4) of the porous substrate for inlet of the fluid medium for treatment and at another end (5) of the porous substrate for outlet of the retentate, the porous substrate defining a peripheral envelope (2₂) beyond which there extends a peripheral space (6) for recovering the filtrate, at least one empty space (10) being arranged inside the porous substrate for delivering the filtrate, the smallest dimension of the empty space being five to fifty times greater than the largest dimension of the pores of the porous material of the substrate, the empty space (10) being surrounded by a portion of the porous material constituting the single-piece substrate, this portion of porous material not being a separate piece added to the porous substrate to surround the empty space (10), such that the empty space does not open out into the channel (3) nor into the inlet or outlet ends (4 or 5) of the substrate, the separator element being **characterized in that** at least one empty space (10) is arranged in the porous substrate so as to be surrounded by a portion of the material constituting the single-piece substrate (2) either completely so as to form a closed cavity or partially so as to form a cavity (10₁) that opens out locally through the peripheral envelope (2₂) of the substrate via a passage (10₂), the cavity (10₁) presenting in at least one direction a section that is greater than the section of the passage (10₂).

2. A separator element according to claim 1, **characterized in that** at least one empty space (10) for delivery of the filtrate is arranged in the porous substrate (2) to form a cavity presenting a profile having at least a portion possessing a shape identical to the shape of the profile of the channel (3) situated facing it.

3. A separator element according to claim 1 or claim 2, **characterized in that** at least one empty space (10) for delivering the filtrate is arranged in the porous substrate to form a cavity with a profile surrounding a channel (3).

4. A separator element according to claim 1 or claim 2, **characterized in that** at least a plurality of empty spaces (10) for delivering the filtrate are arranged locally in the porous substrate starting from its peripheral envelope (2₂), each being surrounded in part by a portion of the porous material, so as to open out through the peripheral envelope (2₂) of the porous substrate and recover the filtrate to deliver it directly to the peripheral space of the porous substrate.

5. A separator element according to claim 4, **characterized in that** the plurality of empty spaces (10) for delivering the filtrate that are arranged locally in the porous substrate starting from its peripheral envelope (2₂) are arranged regularly over said peripheral envelope.

6. A separator element according to any one of claims 1 to 5, **characterized in that** the single-piece porous substrate (2) is made by an additive method.

7. A separator element according to any one of claims 1 to 6, **characterized in that** it includes at least one separator layer (7) for the fluid medium that is deposited continuously on the surface of the channel that comes into contact with the fluid medium.
